# FASCICULE DE BREVET EUROPEEN

(11) **EP 1 458 592 B1**
(45) Date de publication et mention de la délivrance du brevet: **03.05.2006**
(21) Numéro de dépôt: 02796906.2
(22) Date de dépôt: 11.12.2002
(51) Int. Cl.: B60P 3/077, B61D 45/00

(54) **DISPOSITIF DE CALAGE D UN VEHICULE TRANSPORTE SUR UN VEHICUL E TRANSPORTEUR**
VORRICHTUNG ZUM VERRIEGELN DER RÄDER VON AUF EINEM LASTKRAFTWAGEN TRANSPORTIERTEN FAHRZEUGEN
DEVICE FOR SECURING A VEHICLE TRANSPORTED ON A VEHICLE CARRIER

(30) Priorité: 28.12.2001 FR 0117103
(43) Date de publication de la demande: 22.09.2004
(73) Titulaire: The Channel Tunnel Group Limited, Kent, Folkestone CT19 4QS (GB); France-Manche S.A., 75008 Paris (FR)
(72) Inventeur: HUBERT, Annie, F-59221 Bauvin (FR); COCCO, Sergio, F-59840 Perenchies (FR); RIGAUT, Michel, F-59139 Wattignies (FR)
(74) Mandataire: Bentz, Jean-Paul
(86) Numéro de dépôt international: PCT/FR2002/004279
(87) Numéro de publication internationale: WO 2003/059688

(56) Documents cités:
- EP-A- 0 775 608
- DE-A- 4 013 187

## Description

La présente invention concerne un dispositif de calage d'au moins une roue d'un véhicule automobile, embarqué sur un véhicule routier ou ferroviaire.

De tels dispositifs sont nécessaires dans le transport des véhicules car leur immobilisation sur le véhicule transporteur doit être effective, même en cas de freinage brutal du véhicule transporteur.

Cette sécurité doit s'ajouter au dispositif de freinage du véhicule transporté qui bien qu'activé est susceptible néanmoins de défaillance, ou d'une efficacité insuffisante.

Si par le passé, on se contentait de simples cales en bois ou métalliques à profil triangulaire qui étaient disposées de part et d'autre, d'au moins une roue du véhicule transporté, cela n'est plus admissible de nos jours, car non seulement elles nécessitent une main d'oeuvre importante pour leur mise en place et leur retrait mais de plus, elles sont peu fiables, car ne sont pas elles-mêmes retenues sur le véhicule transporteur.

Enfin, le véhicule n'est pas suffisamment sécurisé, car ces cales ne fonctionnent que par adhérence par rapport à la roue.

C'est ainsi que sont apparus des systèmes de calage mécanique encastrés dans le plancher du véhicule transporteur, pouvant être mis en place ou bien escamotés dans celui-ci par un système de bascule commandé manuellement, automatiquement ou encore par la roue même du véhicule transporté lors de sa mise en place.

L'inconvénient de ce type de cale, réside dans le fait qu'il est nécessaire de couper le plancher pour réaliser un évidement, permettant d'intégrer le dispositif de calage, ce qui altère les caractéristiques du plancher qui bien souvent, doit constituer un coupe feu.

De plus, ce type de dispositif constitue une proéminence sur le plancher d'une certaine valeur, ce qui conduit à augmenter d'autant la hauteur du wagon, lorsqu'il s'agit d'un véhicule transporteur ferroviaire, ce qui est incompatible avec les tunnels existants ou les gabarits normalisés ferroviaires.

Egalement, ces systèmes mécaniques sont toujours très lourds car ils doivent résister à l'inertie de véhicules routiers qui sont parfois des camions de gros tonnage et mettent en oeuvre une multiplicité de pièces.

De plus, ils nécessitent une maintenance très coûteuse.

Selon une première phase de la démarche inventive, il a été constaté dans certaines applications, très éloignées du présent domaine, que les coussinets gonflables étaient d'une très grande résistance à la compression.

De tels coussinets sont par exemple déjà employés dans l'extraction des blocs de pierres, la désincarcération, le déplacement de charges suite à un effondrement, le levage de lourdes charges.

Selon une seconde phase de cette démarche inventive, il a été imaginé d'utiliser de tels coussins dans une application totalement nouvelle qui concerne le calage des véhicules à transporter.

Il est connu par le document EP 0 775 608 un dispositif de calage faisant intervenir des coussins gonflables, mais ceux-ci ne constituent que des éléments intermédiaires à l'avant et à l'arrière de la roue ou latéralement, et ne sont pas impliqués directement dans l'immobilisation de la roue concernée, l'immobilisation positive de celle-ci s'effectuant nécessairement par une sangle attachée au plancher et entourant au moins partiellement la roue.

On peut donc parler de préjugés vaincus à utiliser des coussins en tant qu'immobilisation directe et unique d'une roue de véhicule sur un autre véhicule transporteur, ces coussins étant fixés directement sur le plancher de ce dernier.

A cet effet, l'invention concerne un dispositif de calage d'au moins une roue d'un véhicule automobile embarqué sur un véhicule routier ou ferroviaire, du type comportant au moins deux coussins gonflables escamotables appliqués directement à l'avant et/ou à l'arrière d'au moins une roue du véhicule automobile transporté et associé à des moyens de fixation au plancher du véhicule transporteur, caractérisé en ce que les moyens de fixation de chacun des coussins sur/dans le plancher sont constitués par un socle quadrangulaire creux sur lequel est fixé et est susceptible de s'intégrer le coussin, lequel socle est lui-même fixé sur/dans le plancher du véhicule transporteur, lesdits coussins étant associés à des moyens de gonflage et de dégonflage, de manière à ce que lors du chargement ils soient dégonflés pour permettre le roulage du véhicule à transporter, puis son immobilisation en place, par gonflage des deux coussins, en regard d'au moins une roue.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 représente à titre d'exemple, le calage d'un véhicule automobile de type poids lourd en place sur un plancher d'un véhicule ferroviaire équipé du dispositif de calage selon l'invention, en position activée.
La figure 2 représente à titre d'exemple, le calage d'un véhicule automobile de type poids lourd en place sur un plancher d'un véhicule ferroviaire équipé du dispositif de calage selon l'invention, en position désactivée.

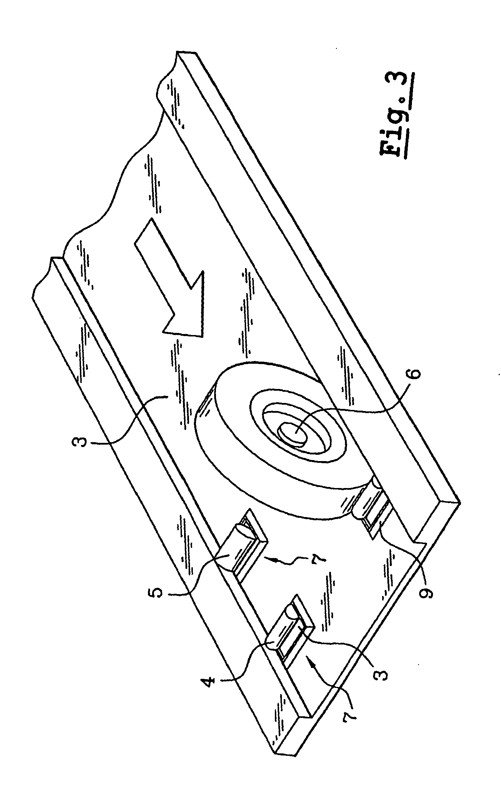

La figure 3 représente schématiquement en perspective un plancher de véhicule ferroviaire sur lequel sont disposés quatre coussins de calage en position active.
Les figures 4 et 5 représentent, à échelle agrandie, une roue de véhicule automobile, en place sur le plancher d'un véhicule ferroviaire dont le dispositif de calage est respectivement activé ou désactivé.

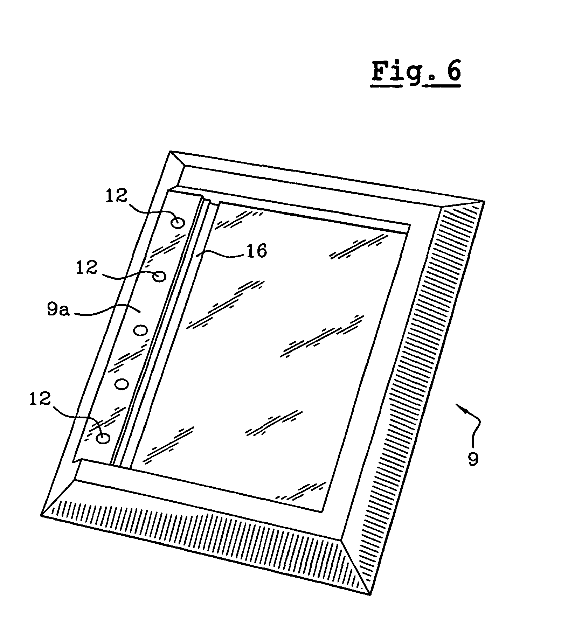

La figure 6 est une vue en perspective d'un socle destiné à la fixation d'un coussin gonflable sur le plancher du véhicule ferroviaire.
Les figures 7 et 8 représentent en perspective, à échelle agrandie, les moyens de fixation d'un coussin gonflable sur un support selon la figure 6 dans une position désactivée et activée dudit coussin.
La figure 9 est une vue schématique en perspective d'un coussin gonflable équipé d'une arrivée d'air.
La figure 10 représente schématiquement un circuit pneumatique d'alimentation en air des coussins.

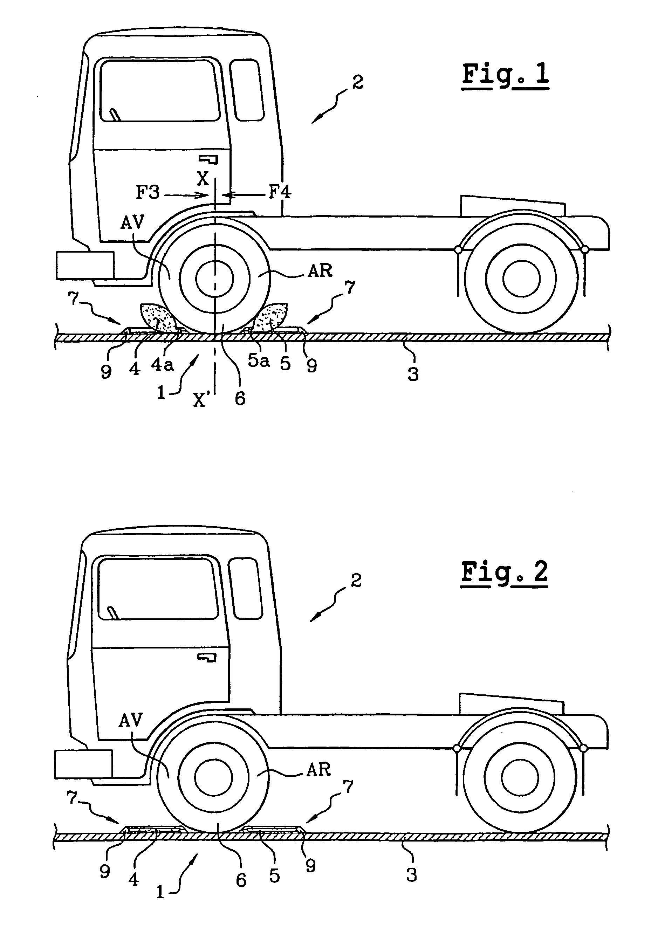

Comme le montre les figures 1 et 2, le dispositif de calage 1 désigné globalement est disposé préférentiellement sur l'essieu directionnel d'un véhicule automobile 2, de type poids lourd selon le présent exemple.

Le dispositif de calage 1 est disposé sur le plancher 3, d'un véhicule ferroviaire par exemple, sur lequel est embarqué ledit véhicule automobile 1.

Il pourra s'agir également d'un véhicule transporteur de type routier.

Selon l'invention le dispositif de calage 1 comprend deux coussins gonflables escamotables 4 et 5 appliqués directement à l'avant AV et à l'arrière AR de chaque roue avant 6 d'un même essieu directionnel du véhicule transporté 2.

Les coussins 4 et 5 sont associés à des moyens de fixation 7 solidaires du plancher 3 du véhicule transporteur.

Si les coussins 4 et 5 sont disposés à l'avant AV et à l'arrière AR des roues avant 6 du véhicule transporté 2, c'est afin de constituer au conducteur une référence de positionnement du véhicule transporté sur le véhicule transporteur, lors de son chargement.

Par ailleurs, les coussins 4, 5 sont associés à des moyens de gonflage et de dégonflage 8, de manière à ce que lors du chargement ils soient tous dégonflés pour permettre le roulage d'un premier véhicule à transporter 2 jusqu'à un premier emplacement sur le véhicule transporteur, puis son immobilisation en place, par gonflage de deux premiers coussins 4, 5, en regard d'au moins une roue avant 6, le gonflage d'autres séries de coussins 4, 5 s'effectuant successivement en fonction de l'arrivage des autres véhicules à transporter 2.

Selon une autre caractéristique de l'invention, le coussin avant 4 est partiellement gonflé dans une première phase, pour constituer un pré-calage de positionnement de la roue avant 6 d'un véhicule transporté 2, puis gonflé totalement et définitivement avec le coussin arrière 5, lorsque ladite roue avant 6 est en place.

Préférentiellement, les coussins gonflables 4, 5 sont conformés de manière telle que leur profil latéral s'inscrit dans un triangle virtuel apte à offrir un effet de cale à la roue 6 dans un sens de circulation F1 et dans l'autre F2.

Selon le présent exemple de réalisation, chacun des coussins 4, 5 est constitué par un volume unique.

Néanmoins, selon une variante de réalisation, non représentée, chacun des coussins 4, 5 est compartimenté en une pluralité de volumes juxtaposés, dont les profils extérieurs définissent un rayon de courbure permettant lors du gonflage d'adapter la géométrie du coussin en fonction de la roue 6.

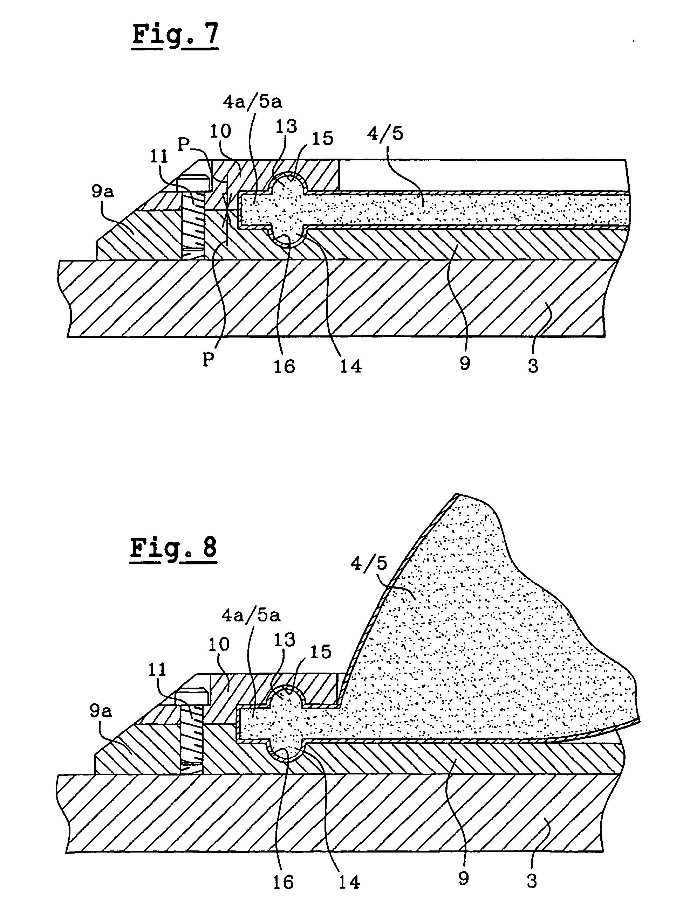

Comme le montre bien les figures 7, 8 et 9, les moyens de fixation 7 de chacun des coussins 4, 5 sur/dans le plancher 3 sont constitués par un socle quadrangulaire creux 9 sur lequel est fixé et est susceptible de s'intégrer le coussin 4, 5, lequel socle 9 est lui-même fixé sur/dans le plancher 3 du véhicule transporteur.

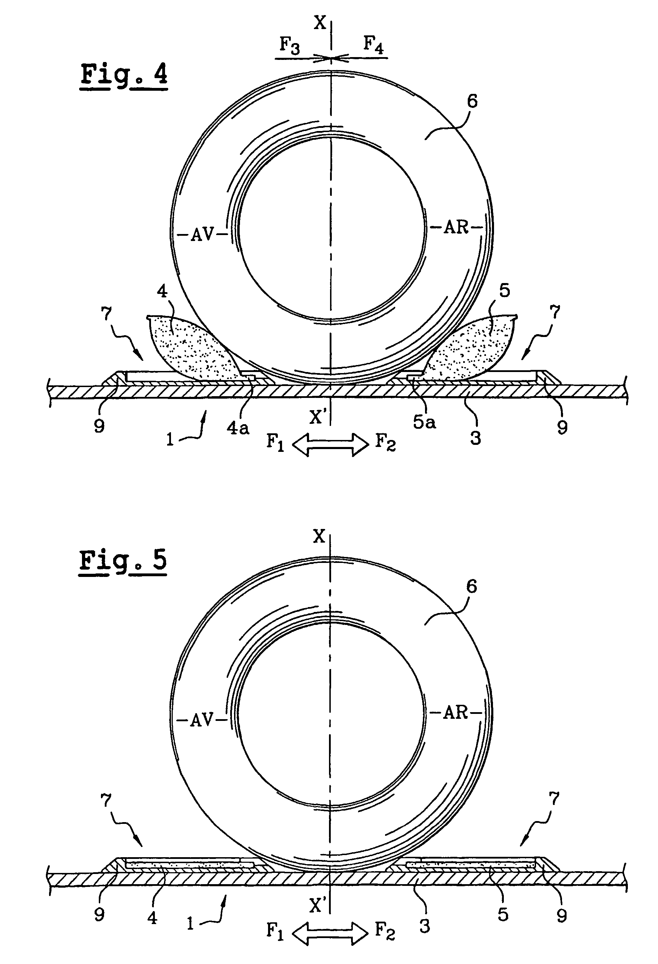

Comme particulièrement visible sur les figures 1 et 4 les coussins avant et arrière 4, 5 d'une même roue 6 sont respectivement fixés sur les socles creux 9 par l'un de leurs bords droits 4a, 5a dirigés dans des sens F3, F4 convergents vers l'axe X, X' de ladite roue 6, de manière à ce que les coussins 4, 5 puissent se développer librement lors du gonflage de part et d'autre de celle-ci.

Bien entendu, on peut très bien imaginer de remplacer deux socles 7 destinés à deux coussins 4 et 5 par un socle unique remplissant une double fonction.

Egalement, les deux coussins 7 et 8 pourraient être remplacés par un élément unique comportant deux poches distinctes gonflables séparément.

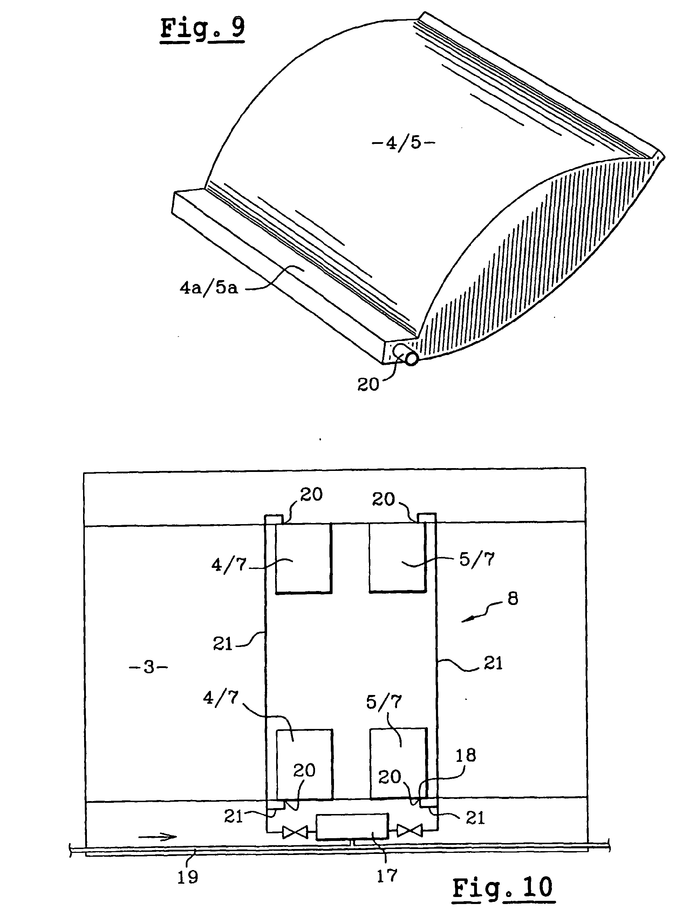

Comme le montre les figures 8 et 9, la fixation des coussins 4, 5 sur l'un des bords latéraux 9a du socle quadrangulaire creux 9 s'effectue par l'intermédiaire d'une barre métallique amovible 12 rapportée par des vis 11 se vissant dans des trous filetés 12 réalisées sur ledit bord 9a du socle 9, en exerçant un pincement P du bord droit 4a, 5a du coussin 4, 5 correspondant.

Selon le présent exemple de réalisation, non limitatif, la zone de pincement du bord droit 4a, 5a du coussin 4, 5 comporte un bourrelet longitudinal supérieur 13 et un bourrelet longitudinal inférieur 14 réalisés symétriquement de part et d'autre de cette zone et coopérant avec des rainures correspondantes 15, 16 de la barre 10 et du bord 9a du socle 9, de manière à être retenu sur celui-ci, sans contact direct des vis de liaison 11 de la barre 10, agissant ainsi à la manière d'une bride.

Par ailleurs, les moyens de gonflage et dégonflage 8 des coussins 4, 5 sont constitués par un circuit pneumatique, existant du véhicule transporteur ou embarqué sur celui-ci, et susceptible d'être mis en oeuvre par un opérateur à partir d'un pupitre de commande embarqué 17 et d'une source d'alimentation 19.

Egalement, le circuit pneumatique 8 comporte au moins, un clapet anti-retour 18, de manière à prévenir toute défaillance d'alimentation une fois les coussins 4, 5 gonflés.

Comme le montre la figure 9, chacun des coussins comporte au moins une arrivée d'air 20 reliée à des canalisations 21.

Il est bien entendu possible d'équiper chaque coussin de plusieurs arrivées d'air 20 afin de diminuer les temps de gonflage et de dégonflage de celui-ci.

En fait, le pupitre de commande 17 précité sera alimenté par l'énergie électrique disponible sur le véhicule transporteur.

Il affichera la mesure en temps réel de la pression dans les coussins et donnera une indication visuelle du fonctionnement correct.

La détection et la visualisation d'une défaillance pouvant conduire à une inefficacité du calage est également prévu.

Le dispositif signalera de manière simple, au chauffeur du véhicule transporté la fin de la procédure de calage ou l'autorisation de rouler.

Par souci de simplification du mode opératoire de calage, tous les pupitres de commande seront placés d'un même côté d'un wagon transporteur s'il s'agit d'un véhicule de transport ferroviaire.

La pression nominale de fonctionnement du dispositif de calage qui vient d'être décrit sera de l'ordre de 8 à 10 bars.

Le matériau principal constituant les coussins 4 ou 5 sera à base d'élastomère souple ou de toute autre matière également souple, ayant des caractéristiques de résistance mécaniques, thermiques, chimiques avec possibilité d'inserts rigides.

La nature du matériau ne doit pas autoriser le glissement et devra prévenir toute amorce de déchirure.

Sa résistance mécanique devra être suffisante pour résister au passage des roues de véhicules routiers chargés, sur les coussins dégonflés, lors de la mise en place de ces véhicules routiers sur le véhicule transporteur.

Préférentiellement, la hauteur de la partie creuse du socle 9 est telle à pouvoir permettre au coussin d'être intégré totalement lorsqu'il est dégonflé.

Le dispositif de calage qui vient d'être décrit répond aux normes concernant le transport sur véhicules ferroviaires et notamment :

Le système devra respecter les normes au feu exigées dans le cahier des charges de la rame :
- comportement au feu des matériaux (Norme NF F 16-101) : catégorie Al, classe de feu M1 et classe de fumée F1,
- résistance au feu du plancher du wagon (Norme ISO 834) : capacité portante, isolation thermique et étanchéité,
- portection et lutte contre l'incendie (Norme NF F 16-103) : éviter et circonscrire un sinistre à un secteur localisé, détection et extinction, évacuation.

## Revendications

1. Dispositif de calage d'au moins une roue (6) d'un véhicule automobile (2) embarqué sur un véhicule routier ou ferroviaire, du type comportant au moins deux coussins gonflables escamotables (4, 5) appliqués directement à l'avant (AV) et à l'arrière (AR) d'au moins une roue (6) du véhicule automobile transporté (2) et associé à des moyens de fixation (7) au plancher (3) du véhicule transporteur, **caractérisé en ce que** les moyens de fixation (7) de chacun des coussins (4, 5) sur/dans le plancher (3) sont constitués par un socle quadrangulaire creux (9) sur lequel est fixé et est susceptible de s'intégrer le coussin (4, 5), lequel socle (9) est lui-même fixé sur/dans le plancher (3) du véhicule transporteur, lesdits coussins (4, 5) étant associés à des moyens de gonflage et de dégonflage (8), de manière à ce que lors du chargement ils soient dégonflés pour permettre le roulage du véhicule à transporter (2), puis son immobilisation en place, par gonflage des deux coussins (4, 5), en regard d'au moins une roue (6).

2. Dispositif selon la revendications 1, **caractérisé en ce que** le coussin avant (4) est partiellement gonflé dans une première phase, pour constituer un pré-calage de positionnement de la roue avant (6) d'un premier véhicule transporté (2), jusqu'à un premier emplacement sur le véhicule transporteur, puis gonflé totalement et définitivement avec le coussin arrière (5), lorsque ladite roue avant (6) est en place, le gonflage d'autre séries de coussins (4, 5) s'effectuant successivement en fonction de l'arrivage des autres véhicules à transporter.

3. Dispositif selon l'une des revendications 1 ou 2, **caractérisé en ce que** les coussins gonflables (4, 5) sont conformés de manière telle que leur profil latéral s'inscrit dans un triangle virtuel apte à offrir un effet de cale à la roue (6) dans un sens de circulation (F1) et dans l'autre (F2).

4. Dispositif selon la revendication 3, **caractérisé en ce que** chacun des coussins (4, 5) est constitué par un volume unique.

5. Dispositif selon la revendication 3, **caractérisé en ce que** chacun des coussins (4, 5) est compartimenté en une pluralité de volumes juxtaposés, dont les profils extérieurs définissent un rayon de courbure permettant lors du gonflage d'adapter la géométrie du coussin en fonction de la roue (6).

6. Dispositif selon l'une des revendications 1 à 5, **caractérisé en ce que** les coussins avant et arrière (4, 5) d'une même roue (6) sont respectivement fixés sur les socles creux (9) par l'un de leurs bords droits (4a, 5a) dirigés dans des sens (F3, F4) convergents vers l'axe (X, X') de ladite roue (6), de manière à ce que les coussins (4, 5) puissent se développer librement lors du gonflage de part et d'autre de celle-ci.

7. Dispositif selon la revendication 6, **caractérisé en ce que** la fixation des coussins (4, 5) sur l'un des bords latéraux (9a) du socle quadrangulaire creux (9) s'effectue par l'intermédiaire d'une barre métallique amovible (12) rapportée par des vis (11) se vissant dans des trous filetés (12) réalisées sur ledit bord (9a) du socle (9), en exerçant un pincement (P) du bord droit (4a, 5a) du coussin (4, 5) correspondant.

8. Dispositif selon la revendication 7, **caractérisé en ce que** la zone de pincement du bord droit (4a, 5a) du coussin (4, 5) comporte un bourrelet longitudinal supérieur (13) et un bourrelet longitudinal inférieur (14) réalisés symétriquement de part et d'autre de cette zone et coopérant avec des rainures correspondantes (15, 16) de la barre (10) et du bord (9a) du socle (9), de manière à être retenu sur celui-ci, sans contact direct des vis de liaison (11) de la barre (10), agissant ainsi à la manière d'une bride.

## Patentansprüche

1. Vorrichtung zum Verriegeln mindestens eines Rades (6) eines Kraftfahrzeuges (2), das auf ein Straßen- oder Schienenfahrzeug verladen ist, der Bauart umfassend mindestens zwei aufblasbare einziehbare Kissen (4, 5), die direkt an die Vorderseite (AV) und an die Hinterseite (AR) mindestens des einen Rades (6) des transportierten Kraftfahrzeuges (2) anzulegen sind und Fixiermitteln (7) an dem Boden (3) des Transportfahrzeuges zugeordnet sind, **dadurch gekennzeichnet, daß** die Fixiermittel (7) jedes Kissens (4, 5) auf/im Boden (3) von einem rechteckigen, vertieften Untersatz (9) gebildet sind, auf welchem das Kissen (4, 5) fixiert und zum sich Integrieren ausgebildet ist, wobei dieser Untersatz (9) selbst auf/im Boden (3) des Transportfahrzeuges fixiert ist, die besagten Kissen (4, 5) Mittel zum Aufblasen und Ablassen (8) derart zugeordnet sind, daß die Kissen nach dem Verladen abgelassen werden, um das Rollen des zu transportierenden Fahrzeuges (2) und danach dessen Immobilisierung an Ort und Stelle durch Aufblasen der beiden Kissen (4, 5) in Bezug auf mindestens ein Rad (6) zu ermöglichen.

2. Vorrichtung nach Anspruch 1, **dadurch gekennzeichnet, daß** das vordere Kissen (4) in einer ersten Phase teilweise aufgeblasen wird, um ein Vorblockieren der Positionierung des Vorderrades (6) eines ersten zu transportierenden Fahrzeuges (2) bis zu einer ersten Plazierung auf dem Transportfahrzeug herzustellen, und dann vollständig und definitiv zusammen mit dem hinteren Kissen (5) aufgeblasen wird, wenn das besagte Vorderrad (6) an seinem Platz ist, wobei das Aufblasen der anderen Kissenpaare (4, 5) sukzessive in Abhängigkeit von der Ankunft der anderen zu transportierenden Fahrzeuge stattfindet.

3. Vorrichtung nach Anspruch 1 oder 2, **dadurch gekennzeichnet, daß** die aufblasbaren Kissen (4, 5) derart geformt sind, daß ihr seitliches Profil sich in ein virtuelles Dreieck einfügt, welches geeignet ist, eine Klemmwirkung auf das Rad (6) in einer Fahrtrichtung (F1) und in einer anderen Fahrrichtung (F2) anzubieten.

4. Vorrichtung nach Anspruch 3, **dadurch gekennzeichnet, daß** jedes Kissen (4, 5) durch ein einziges Volumen gebildet ist.

5. Vorrichtung nach Anspruch 3, **dadurch gekennzeichnet, daß** jedes Kissen (4, 5) in mehrere, nebeneinander angeordnete Volumina abgeteilt ist, deren äußere Profile einen Krümmungs-Einhüllende definieren, welche beim Aufblasen für ein Anpassen der Kissengeometrie in Abhängigkeit von dem Rad (6) sorgt.

6. Vorrichtung nach einem der Ansprüche 1 bis 5, **dadurch gekennzeichnet, daß** die hinteren und vorderen Kissen (4, 5) ein- und desselben Rades (6) jeweils auf den vertieften Untersätzen (9) vermittels eines ihrer geraden Enden (4a, 5a) fixiert sind, welche in zu der Achse (X, X') konvergenten Richtungen (F3, F4) fixiert sind, derart, daß die Kissen (4, 5) sich während des Aufblasens zur einen bzw. anderen Seite frei entfalten können.

7. Vorrichtung nach Anspruch 6, **dadurch gekennzeichnet, daß** die Befestigung der Kissen (4, 5) an einem der seitlichen Ränder (9a) des vertieften rechteckigen Untersatzes (9) vermittels einer metallischen, unbeweglichen Strebe (10) bewerkstelligt ist, die von Schrauben (11) gehalten ist, welche in Gewindelöcher (12) im besagten Rand (9a) des Untersatzes (9) eingeschraubt sind, wobei sie eine Klemmung (P) des geraden Randes des entsprechenden Kissens (4, 5) bewirken.

8. Vorrichtung nach Anspruch 7, **dadurch gekennzeichnet, daß** die Klemmzone des geraden Randes (4a, 5a) des Kissens (4,5) einen langgestreckten oberen Wulst (13) und einen langgestreckten unteren Wulst (14) hat, die jeweils symmetrisch zu dieser Zone angeordnet sind und mit entsprechenden Nuten (15, 16) der Strebe (10) und des Randes (9a) des Untersatzes (9) derart zusammenwirken, daß sie an diesem ohne direkten Kontakt mit den Schrauben (1 1) zum Befestigen der Strebe (10) zurückgehalten sind, um so wie ein Bügel zu wirken.

## Claims

1. Device for chocking at least one wheel (6) of a motor vehicle (2) carried onboard a road -going or rail vehicle, of the type comprising at least two retractable inflatable cushions (4, 5) applied directly to the front (AV) and to the rear (AR) of at least one wheel (6) of the motor vehicle (2) transported and associated with means (7) of attachment to the floor (3) of the carrier vehicle, **characterized in that** the means (7) of attachment of each of the cushions (4, 5) onto/into the floor (3) consi st of a hollow quadrangular base (9) to which the cushion (4, 5) is fixed and into which said cushion can be incorporated, which base (9) is itself fixed onto/into the floor (3) of the carrier vehicle, the said cushions (4, 5) being associated with inflati on and deflation means (8) so that during loading they are deflated to allow the vehicle (2) that is to be transported to drive on, and can then immobilize it by inflation of the two cushions (4, 5) against at least one wheel (6).

2. Device according to Claim 1, **characterized in that** the front cushion (4) is partially inflated in a first phase, in order to pre -position the front wheel (6) of a first vehicle (2) transported in a first location on the carrier vehicle, and is then fully and permanently inflated together with the rear cushion (5) when the said front wheel (6) is in place, inflation of further series of cushions (4, 5) taking place in succession as other vehicles for transporting arrive.

3. Device according to one of Claims 1 and 2, **characterized in that** the inflatable cushions (4, 5) are shaped in such a way that their lateral profile falls inside a virtual triangle able to offer the wheel (6) a chocking effect in one direction of travel (F1) and in the other (F2).

4. Device according to Claim 3, **characterized in that** each of the cushions (4, 5) consists of a single volume.

5. Device according to Claim 3, **characterized in that** each of the cushions (4, 5) is compartmentalized into a plurality of juxtaposed volumes, the external profiles of which define a radius of curvature which, upon inflation allows the geometry of the cushion to adapt to suit the wheel (6).

6. Device according to one of Claims 1 to 5, **characterized in that** the front and rear cushions (4, 5) of one and the same wheel (6) are respectively fixed to the hollow bases (9) by one of their straight edges (4a, 5a) facing in directions (F3, F4) that converge towards the axis (X, X') of the said wheel (6) so that the cushions (4, 5) can unfold freely as they are inflated and on either side of this wheel.

7. Device according to Claim 6, **characterized in that** the attachment of the cushions (4, 5) to one of the lateral edges (9a) of the hollow quadrangular base (9) is achieved through the intermediary of a removable metal bar (12) attache d by screws (11) screwed into threaded holes (12) made on the said edge (9a) of the base (9), trapping (P) the corresponding straight edge (4a, 5a) of the cushion (4, 5).

8. Device according to Claim 7, **characterized in that** the region in which the straig ht edge (4a, 5a) of the cushion (4, 5) is trapped comprises an upper longitudinal bead (13) and a lower longitudinal bead (14) which are produced symmetrically on either side of this region and collaborate with corresponding grooves (15, 16) in the bar (10) and in the edge (9a) of the base (9), so as to be retained thereon, without direct contact with the screws (11) that connect the bar (10) that thus acts as a clamp.
